# EUROPÄISCHE PATENTANMELDUNG

(11) **EP 0 697 484 A1**
(43) Veröffentlichungstag der Anmeldung: **21.02.1996**
(21) Anmeldenummer: 95109842.5
(22) Anmeldetag: 23.06.1995
(51) Int. Cl.: D21H 19/82, D21H 19/12, D21H 19/32, D21H 27/00, C09J 7/04

(54) **Trennrohpapier mit silikathältigen Primerstrichen**

(30) Priorität: 21.07.1994 DE 4425737
(71) Anmelder: KÄMMERER GMBH, D-49090 Osnabrück (DE)
(72) Erfinder: Reinhardt, Bernd, Dr.-Ing., D-49082 Osnabrück (DE); Viehmeyer, Volker, D-49086 Osnabrück (DE); Hottenträger, Michael, Dipl.-Ing., D-49080 Osnabrück (DE)
(74) Vertreter: Cohausz & Florack

(57) **Zusammenfassung**

Trennrohpapier mit silikathaltigen Primerstrichen auf der Basis von Kalium- oder Natriumwasserglas, wodurch die Penetration nachfolgender Beschichtungen mit wässrigen, lösungsmittelhaltigen oder lösungsmittelfreien Silikonsystemen in das Papiergefüge gemindert und dadurch eine Verringerung des Silikonbedarfs zur Erzielung vorgegebener Trennkräfte erreicht wird.

## Beschreibung

Zur Herstellung sogenannter Trennpapiere mit dehäsiven Eigenschaften gegenüber Klebstoffschichten wird Papier mit einer Silkonschicht versehen. Um dem Papier eine gewisse Oberflächendichtigkeit zu verleihen und damit die Penetration des Silikonauftrags in das Papier zu behindern, werden Trennrohpapiere, die noch über keinen Silikonauftrag verfügen, mit üblichen Imprägnier- oder Oberflächenleimungsmitteln behandelt. Je nach Art, Konzentration, Temperatur und Viskosität dieser Mittel wird eine reine Oberflächenabdeckung des Papiers oder eine partielle Penetration der Auftragsmassen in das Papier erreicht.

Es ist ferner bekannt, Pigment/Bindemittel-Kombinationen wie Kaolin, Talkum oder Calciumcarbonate sowie als Bindemittel vorwiegend Polymerdispersionen auf Trennrohpapiere aufzubringen. Unter Trennrohpapier werden üblicherweise Papiere verstanden, auf denen ein dehäsiver Silikonauftrag noch nicht ausgebildet ist.

Trotz Oberflächenabdeckung von Trennrohpapieren ist aber eine teilweise Penetration von wäßrigen, vor allem aber lösungsmittelfreien Silikonharzen aufgrund der niedrigen Molekulargewichte in das Rohpapier nicht zu verhindern (Sonderheft des 15. Münchner Klebstoff- und Veredlungsseminars, 1991, S. 20 - 28).

Der Anteil lösungsmittelfreier Silikonharze, der in das Papiergefüge penetriert und damit für die angestrebte Dehäsivwirkung des zu bildenden Silikonfilms verloren geht, kann bis zu 20 % betragen. So sind bei lösungsmittelfreien Silikonsystemen im allgemeinen Beschichtungen von etwa 1 g/m² ± 0,2 g/m² erforderlich, um ausreichende Dehäsiveigenschaften gegenüber den meisten Klebstoffsystemen zu erreichen (minimal erforderliche Silikonbeschichtungsmenge).

Es ist deshalb von besonderem wirtschaftlichen Interesse, die Penetrationsneigung der Silikonharze bei der Papierbeschichtung nach Möglichkeit völlig zu verhindern und dadurch mit geringstmöglichem Silikonauftrag zu einem geschlossenen Silikonfilm mit hoher Dehäsivwirkung zu gelangen. Dazu müßten jedoch die feinen Poren auf der Papieroberfläche vollständig ausgefüllt werden. Eine solche Versiegelung der Papieroberfläche darf aber die Verankerung des Silikonfilms auf der Papieroberfläche nicht verschlechtern.

Es sind Verfahren und Beschichtungsrezepturen bekannt, die letztgenannter Zielstellung weitgehend entsprechen. So wird in der EP 396 789 B1 durch einen Zusatz von wäßrigen Katalysatoremulsionen bis zu 25 % (fest gerechnet) zu üblichen Oberflächenpräparationen für Trennrohpapiere die Haftung des Papiers zum Silikonfilm verbessert. Die EP 399 079 A1 beschreibt dagegen den positiven Einfluß von Zusätzen an organischem Silicium (Organosiloxane oder Organopolysiloxane) bis zu 20 % (fest gerechnet) zu den üblichen Oberflächenpräparationen für Trennrohpapiere auf die Vernetzungsgeschwindigkeit des zu bildenden Silikonfilms. Diese Zusätze sind aber relativ teuer. Außerdem wird dadurch auch keine Verringerung der minimal erforderlichen Silikonbeschichtungsmenge erreicht, was in beiden Patentschriften auch nicht beabsichtigt war.

In der DE-OS 22 37 551 wird ein Zusatz von SiO₂-Hydrosol im Verhältnis 1,0 : 3,2 Na₂O/SiO₂ zu Organosiloxanen und Diorganopolysiloxanen als Dehäsivbeschichtung für Papier beschrieben. Hierbei stellt Natriumsilikat einen kostengünstigen Siloxanextender bei der Herstellung von Oranosilikon-Polymeren dar. Der Wasserglasanteil im Gemisch beträgt dabei etwa 25 Gew. %.

Aufgabe der Erfindung ist es, Trennrohpapiere mit einer kostengünstigen Beschichtung bereitzustellen, die eine nahezu geschlossene Papieroberfläche aufweisen und damit eine Verminderung oder gar Verhinderung der Penetration von Silikonharzen ermöglichen, wobei gleichzeitig eine gute Haftung zwischen Papieroberfläche und Silikonfilm gegeben sein soll.

Gelöst wird diese Aufgabe durch ein Trennrohpapier für die Beschichtung mit einem dehäsiven Silikonauftrag, wobei auf dem Papier ein Wasserglasstrich ausgebildet ist. Durch diese Art der Oberflächenabdichtung bei Trennrohpapieren wird eine Einsparung an Silikonharz, insbesondere bei lösungsmittelfreien und wäßrigen Systemen, bei gleichbleibenden Dehäsiveigenschaften des fertigen Trennpapiers erreicht.

Gemäß einer bevorzugten Ausführungsform enthält der Wasserglasstrich Filmbildner auf der Basis von polymeren Lösungen oder Dispersionen. Geeignete Filmbildner sind Polyvinylalkohole, Stärkederivate, Carboxymethylcellulosen, Alginate, wäßrige Polymerdispersionen auf der Basis von Acrylsäure, Acrylsäureestern, Acrylnitril, Vinylacetat, Butadien und Styrol, wäßrige Lösungen von Copolymerisaten auf der Basis von Maleinsäureanhydrid und Maleinsäure mit Styrol, Acrylsäure, Acrylsäureestern und/oder Plastifizierungsmitteln mit stark hygroskopischen Eigenschaften wie Ethylenglykole und Glycerin. Durch Zugabe dieser Filmbildner können die Oberflächenpräparationen in ihren chemisch-physikalischen Eigenschaften verändert und die sich ausbildenden Oberflächenfilme bezüglich Steifigkeit, Oberflächendichtigkeit und Alterungsbeständigkeit modifiziert werden. Vorzugsweise werden diese Zusätze in einer Menge bis zu 30 % (fest gerechnet) dem Wasserglas zugegeben und sind in einer solchen Menge im Wasserglasstrich vorzugsweise enthalten.

Der Wasserglasstrich ist gemäß einer bevorzugten Ausführungsform in einer Masse von 0,5 bis 3 g/m² auf dem Papier ausgebildet, wobei zu diesem Zweck auch oberflächengeleimte Papiere in vorteilhafter Weise eingesetzt werden können.

Unter der Bezeichnung Wasserglas werden wasserlösliche Kalium- und Natriumsilikate oder deren wäßrige Lösungen verstanden. Wasserglas ist im Handel mit einem Feststoffgehalt von 30 bis 50 Gew. % erhältlich. Die chemischen und physikalischen Eigenschaften von Wasserglas in Form eines Gemischs von im wesentlichen geradkettig aufgebauten Alkalipolysilikaten werden weitgehend durch das Molverhältnis von SiO₂ und Alkalioxid bestimmt.

Überraschend wurde festgestellt, daß die negativen Eigenschaften von Wasserglas bei der Papierverarbeitung im Hinblick auf die Beeinträchtigung der Weißgradstabilität durch den hohen pH-Wert von ≧ 10,5 und die zunehmende Sprödigkeit mit steigendem Wasserglaszusatz durch geeignete verfahrenstechnische und chemische Möglichkeiten bei der Oberflächenbeschichtung weitgehend unterdrückt werden könnten. Erfindungsgemäß erfolgt das Auftragen des Wasserglasstrichs nach der sogenannten Dünnstrich-Technologie, bei der extrem dünne Striche von 1 bis 3 g/m² und vorzugsweise unter 1,5 g/m² von ursprünglich ausschließlich reaktiven Substanzen auf der Basis organophiler Schichtsilikate auf das Trägerpapier aufgebracht wurden. Beschrieben ist dieses Verfahren in "Das Papier", 1992, Nr. 6, S. 273 - 276, auf dessen Offenbarung bezüglich des Auftragverfahrens hingewiesen wird.

Als Auftragsvorrichtung sind Multi-Glattwalzen- und Rasterwalzen-Auftragswerke (Reverse-Gravur, Akku-Gravur und Vario-Gravur-Verfahren), Walzenauftragswerke mit volumetrischer Vordosierung (Gate-Role- und Blade-Metering-Filmpressen) oder Klingenstreichaggregate mit Vordosierungseinrichtung (High Special Metering-Dosiertechnik wie Billblade HSM, LAS, HSM und Twin-HSM) geeignet. Diese Auftragsvorrichtungen basieren auf der direkten oder indirekten Filmtransfer-Technik, die es gestattet, dünnste Striche exakt dosiert - unter weitgehender Ausschaltung einer partiellen Penetration der Oberflächenpräparation in das Papiergefüge - auf der Oberfläche zu applizieren.

Mit diesen Verfahren lassen sich auch poröse Rohpapiere mit Wasserglas beschichten, wobei Wasserglas allein oder im Gemisch mit Filmbildnern die Poren des Rohpapiers weitgehend verschließen kann.

Es ist vorteilhaft, die erfindungsgemäßen Oberflächenpräparationen in einem zweiten Beschichtungsvorgang innerhalb der Papiermaschine (Deckstrich) auf ein bereits oberflächengeleimtes Trennrohpapier gemäß beschriebenem Stand der Technik (Grundstrich) aufzubringen, um bei geringen Beschichtungsmengen von < 1,5 g/m² möglichst < 1,0 g/m² eine nahezu geschlossene Papieroberfläche mit ausgezeichneten Barriereeigenschaften gegenüber Silikonharzen zu erzielen.

Ein Verzicht auf einen Grundstrich ist jedoch möglich, wobei dann aber der Deckstrich zur Erzielung vergleichbarer Oberflächendichtigkeit des Rohpapiers bis zu 3 g/m² betragen sollte.

Gegenstand der Erfindung ist ferner ein Trennpapier, welches über einen Wasserglas-Primerstrich, wie zuvor beschrieben wurde, verfügt, auf dem zur Verleihung von dehäsiven Eigenschaften ein Silikonauftrag ausgebildet ist. Das Trennpapier ist vorzugsweise oberflächengeleimt und die Menge des Silikonauftrags beträgt vorzugsweise etwa 0, 5 bis 0,9 g/m².

Geeignete organische Silikonpolymere mit dehäsiven Eigenschaften sind dem Fachmann bekannt, sie umfassen beispielsweise kettenförmige Dimethylpolysiloxane mit endständigen Hydroxylgruppen, die unter der Einwirkung erhöhter Temperatur und in Gegenwart von Organozinnsalzen als Katalysator mit Kieselsäureestern kondensiert werden, oder auf dem Wege der Additionsvernetzung durch Reaktion von kettenförmigen Polymeren mit Vinylendgruppen mit Wasserstoffsiloxanen unter Temperatureinwirkung in Gegenwart von Platinkatalysatorn erhalten werden. Für die Beschichtung der Papiergrundlage können die bereits genannten Auftragsverfahren eingesetzt werden.

Die Erfindung wird nun anhand von Beispielen näher erläutert.

### Beispiel 1

Auf ein nicht oberflächengeleimtes Trennrohpapier mit einer flächenbezogenen Masse von 67 g/m² wurden mit einer Laborleimpresse Oberflächenpräparationen der Zusammensetzung gemäß Tabelle 1 mit einer Beschichtungsmenge von 1 g/m² (fest gerechnet) aufgetragen.

Diese im Labor beschichteten und anschließend getrockneten Rohpapiere wurden nach Wiederbefeuchtung in einem Zweiwalzen-Laborkalander unter praxisnahen Bedingungen satiniert und anschließend geprüft. Die Prüfwerte sind in der Tabelle 2 zusammengestellt.

Danach wird bereits durch geringe Zusätze an Wasserglas (1 bis 5 %, fest gerechnet) zur Standard-Rezeptur (PVA/CMC) die Oberflächendichtigkeit der Papiere, ausgedrückt als Porosität, Öl- und Wasseraufnahme, verschlechtert. Außerdem sinkt mit zunehmendem Wasserglaszusatz die Hitzeresistenz (s. Weißgradabfall).

Demnach ist mit nur geringe Anteile an Wasserglas enthaltenden Grundstrichen von 1 g/m² die angestrebte Verbesserung der Oberflächendichtigkeit von nicht oberflächengeleimten Trennrohpapieren nicht zu erreichen.

Erst ab Auftragsmengen zwischen 2,5 und 3 g/m² wurden mit Wasserglas enthaltenden Grundstrichen Oberflächendichtigkeiten der Papiere erreicht, die mit denen des Referenzpapiers (Nr. 1, 1 g/m² Strichauftrag) nahezu identisch waren.

Eine Verbesserung der Oberflächendichtigkeit (Porosität, Ölaufnahme) der Trennrohpapiere wurde erst durch das Aufbringen eines reinen Wasserglasstrichs auf ein in der Papiermaschine oberflächengeleimtes Trennrohpapier erreicht (s. Tabelle 3, Nr. 5 im Vergleich zu Nr. 4 [Standard]). Durch den Wasserglasfilm wird neben der bereits erwähnten schlechteren Hitzeresistenz auch eine stärkere Steifigkeit des behandelten Papiers erzielt.

### Beispiel 2

In einer weiteren Versuchsreihe wurde ein bereits in der Papiermaschine oberflächengeleimtes Standard-Trennrohpapier mit einer flächenbezogenen Masse von 60 g/m² mit unterschiedlichen Deckstrichen von 1 g/m² gemäß Rezepturübersicht in Tabelle 4 versehen. Nach erfolgter Nachbehandlung analog Beispiel 1 wurden die Papiere geprüft. Die Ergebnisse sind der Tabelle 5 zu entnehmen.

Danach trat durch den Zusatz von verschiedenen Polymeren bis zu 30 % (fest gerechnet) zu Kaliumwasserglas im Vergleich zum reinen Wasserglasstrich (Nr. 6) keine signifikante Veränderung der Oberflächendichtigkeit hinsichtlich Porosität und Ölaufnahme ein. Dagegen wurden Glätte, Mikrorauheit, Glanz und Hitzeresistenz durch den Zusatz von Polymeren positiv beeinflußt, vor allem bei Verwendung von Plastifizierungsmitteln wie Polyethylenglykol (Nr. 7 bis 9), Polyvinylalkohol (Nr. 10 bis 12) bzw. eines Gemisches von Maleinsäureanhydrid und Styrol-Butadien-Copolymerisat (Nr. 13 bis 15). Ähnliche Qualitätsverbesserungen wurden ebenfalls durch die Zumischung von anderen wasserlöslichen Polymeren wie Stärke, Carboxymethylcellulose, Stärkederivaten und anderen wäßrigen Polymerdispersionen wie Acrylsäure-Mischpolymerisaten erreicht.

Ein weiterer positiver Effekt war die Erhöhung der Flexibilität der Oberflächenfilme durch diese Polymerzusätze, die sich nicht nur in einer Glättesteigerung durch die Satinage, sondern auch in weitgehend rißfreien Filmen unter dem Rasterelektronenmiskroskop zeigte.

### Beispiel 3

Ein beidseitig oberflächengeleimtes, unsatiniertes Standard-Trennrohpapier mit einer flächenbezogenen Masse von 60 g/m² wurde in einem separaten Arbeitsgang mittels Rasterwalzen auftrags einseitig mit unterschiedlichen Natriumwasserglaslösungen beschichtet (Papiere B, C). Die Beschichtungsmenge betrug weniger als 1 g/m² (fest gerechnet). Die so beschichteten erfindungsgemäßen Papiere wurden anschließend in einem 16-Walzen-Superkalander satiniert.

Im Vergleich zu einem beidseitig oberflächengeleimten und satinierten Standard-Trennrohpapier (Papier A) ohne erfindungsgemäßen Deckstrich wurde eine Verbesserung der Oberflächendichtigkeit (Porosität, Ölaufnahme) erreicht. Die Oberflächenrauheit nimmt dagegen zu (s. PPS-Werte, Glätte nach Bekk), ebenso beim Papier B die Hitzevergilbung. Diese Verschlechterung in einigen Papiereigenschaften hat jedoch keinen negativen Einfluß auf die Dehäsivwirkung silikonisierter Papiere, wie später noch belegt wird. Die Ergebnisse sind in der Tabelle 6 zusammengestellt.

Die Versuchspapiere A, B und C wurden dann in einer Technikumsanlage unter praxisnahen Bedingungen (5-Walzen-Auftragswerk, 300 m/min) mit einem lösungsmittelfreien Standard-Silikonsystem beschichtet. Der Silikonauftrag wurde dabei zwischen 0,5 g/m² und 0,9 g/m² (fest gerechnet) variiert.

Mittels verschiedener Farbreagenzien wurde die Geschlossenheit der aufgebrachten Silikonfilme bestimmt. Die Ergebnisse sind aus der Tabelle 7 zu entnehmen.

Je geringer die Farbmaßzahl ausfällt, um so geschlossener ist der gebildete Silikonfilm und um so höher müßte demnach die Dehäsivwirkung gegenüber Klebstoffen sein.

Bei etwa vergleichbarem Silikonauftrag von 0,8 bis 0,9 g/m² liegen die an den erfindungsgemäßen Papieren B und C ermittelten Farbmaßzahlen, unabhängig von der verwendeten Farbreagenz, mit einer Ausnahme (Methylenblau) bedeutend niedriger als beim Standardpapier A.

Sogar bei einer Verminderung des Silikonauftrags auf etwa 0,5 g/m² liegen die Farbmaßzahlen (wiederum mit der Ausnahme Methylenblau) noch niedriger als beim Standardpapier mit 0,9 g/m² Silikonauftrag. Die Papiere der Versuchsserie B weisen im allgemeinen etwas geringere Farbmaßzahlen als die Papiere der Versuchsserie C auf, vermutlich aufgrund eines höheren Wasserglasauftrags.

Durch Trennkraftmessungen mit Testklebebändern wurden nun zusätzlich die Dehäsiveigenschaften der silikonisierten Papiere ermittelt. Die Ergebnisse sind der Tabelle 8 (low speed-Messungen) zu entnehmen. Je niedriger die Trennkraftwerte ausfallen, um so höher sind die Dehäsiveigenschaften des silikonbeschichteten Papiers. Die Ergebnisse von low speed-Messungen sind nach allgemeiner Erfahrung der Silikonbeschichter aussagekräftiger als high speed-Meßwerte. Das gilt besonders dann, wenn Differenzierungen zwischen verschiedenen Silikonoberflächen vorgenommen werden sollen.

In der Praxis wird oft das Naturkautschuk-Testklebeband K 7476 zur Beurteilung der Trenneigenschaften silikonisierter Papiere herangezogen. Ein Meßwertvergleich (s. Tabelle 8) bestätigt die besseren Dehäsiveigenschaften der erfinderungsgemäßen Versuchspapiere B und C mit Wasserglas-Deckstrich gegenüber Versuchspapier A (Standard).

Auch bei Verwendung des Kautschuk-Testklebebandes 154 werden analoge Ergebnisse erhalten. Die Papiere der Versuchsreihe B werden wiederum bei diesem Vergleich etwas günstiger als die der Versuchsserie C bewertet. Das gilt ebenfalls für high-speed-Messungen (s. Tabelle 9).

Die niedrigsten Trennwerte weist überraschenderweise das Versuchspapier B 3 mit einem sehr niedrigen Silikonauftrag von nur 0,5 g/m² auf.

Ohne diese Meßwerte überzubewerten, kann doch daraus geschlußfolgert werden, daß die erfindungsgemäßen Trennrohpapiere mit einem Wasserglas enthaltenden Deckstrich einen deutlich verbesserten "Silicon hold out" besitzen, der zur Reduzierung des Silikonauftrags um mindestens 20 % unter Beibehaltung des vorgegebenen Trennkraftniveaus genutzt werden kann.

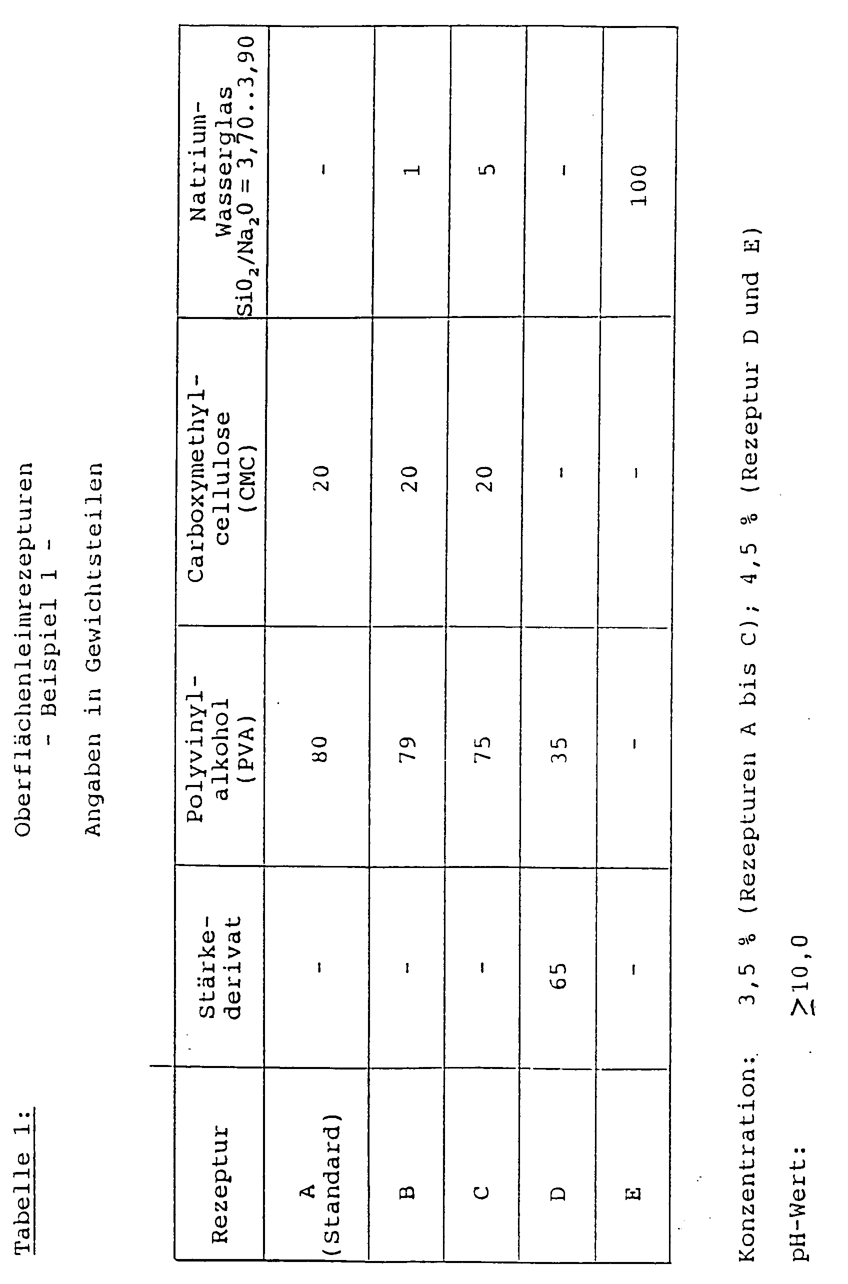

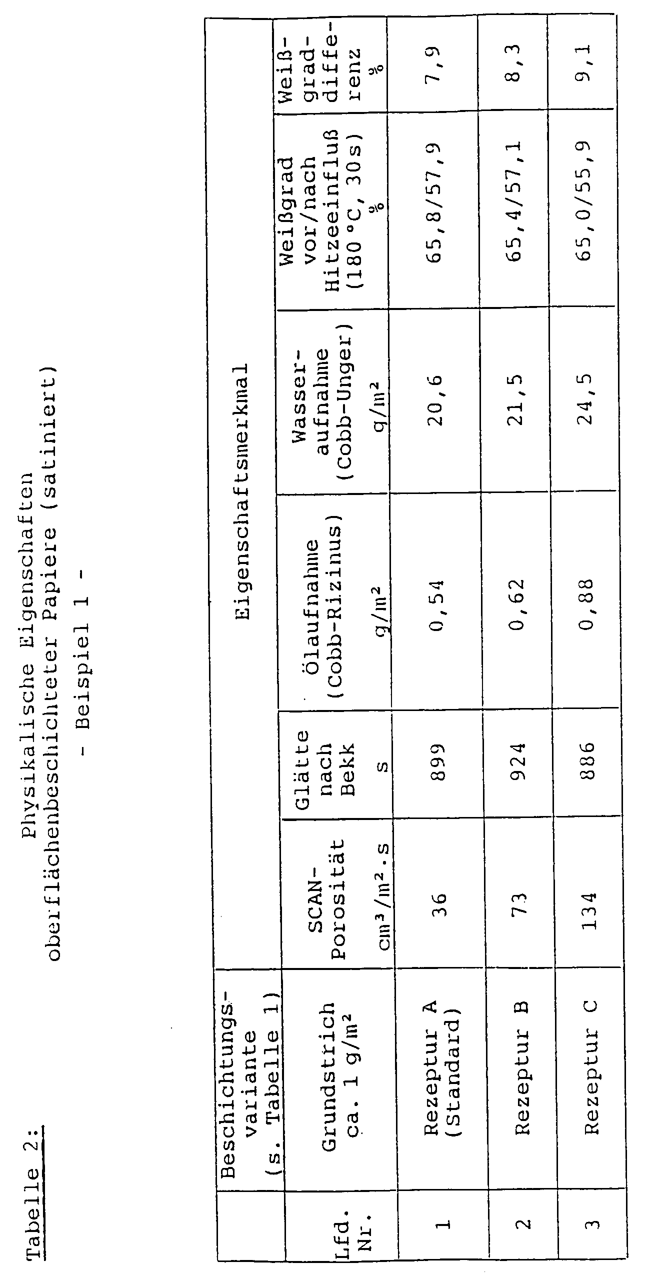

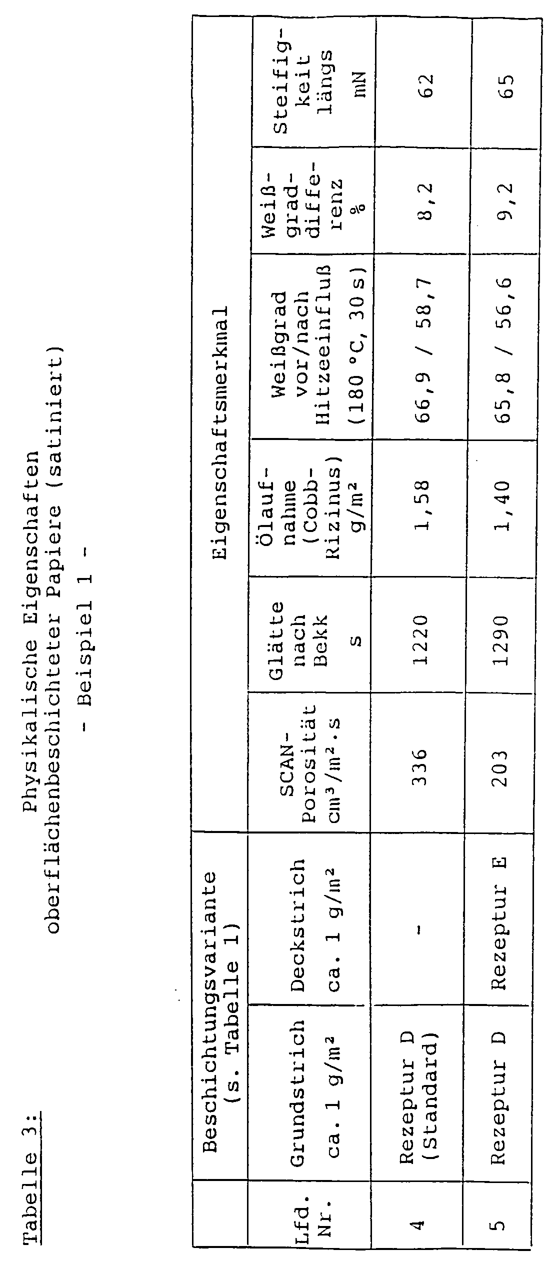

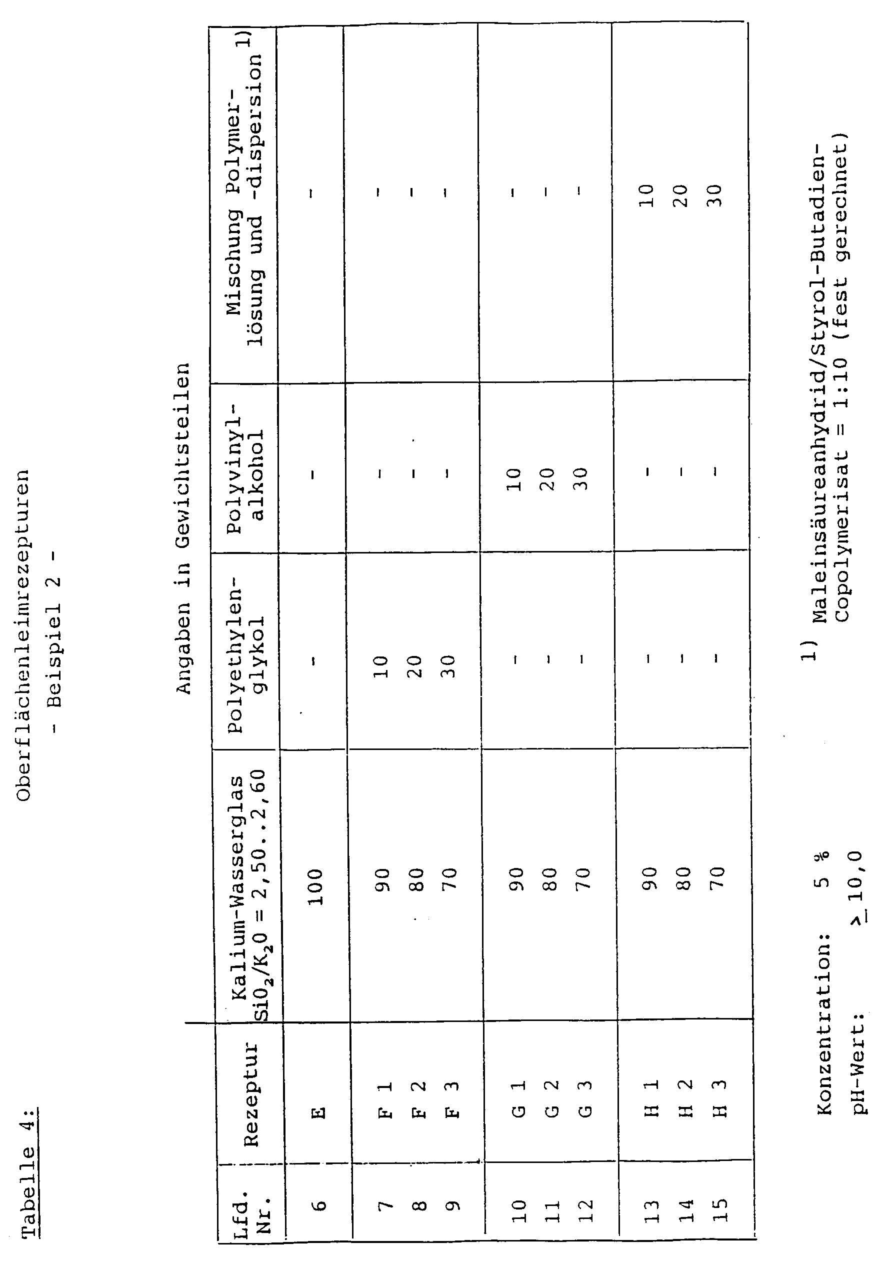

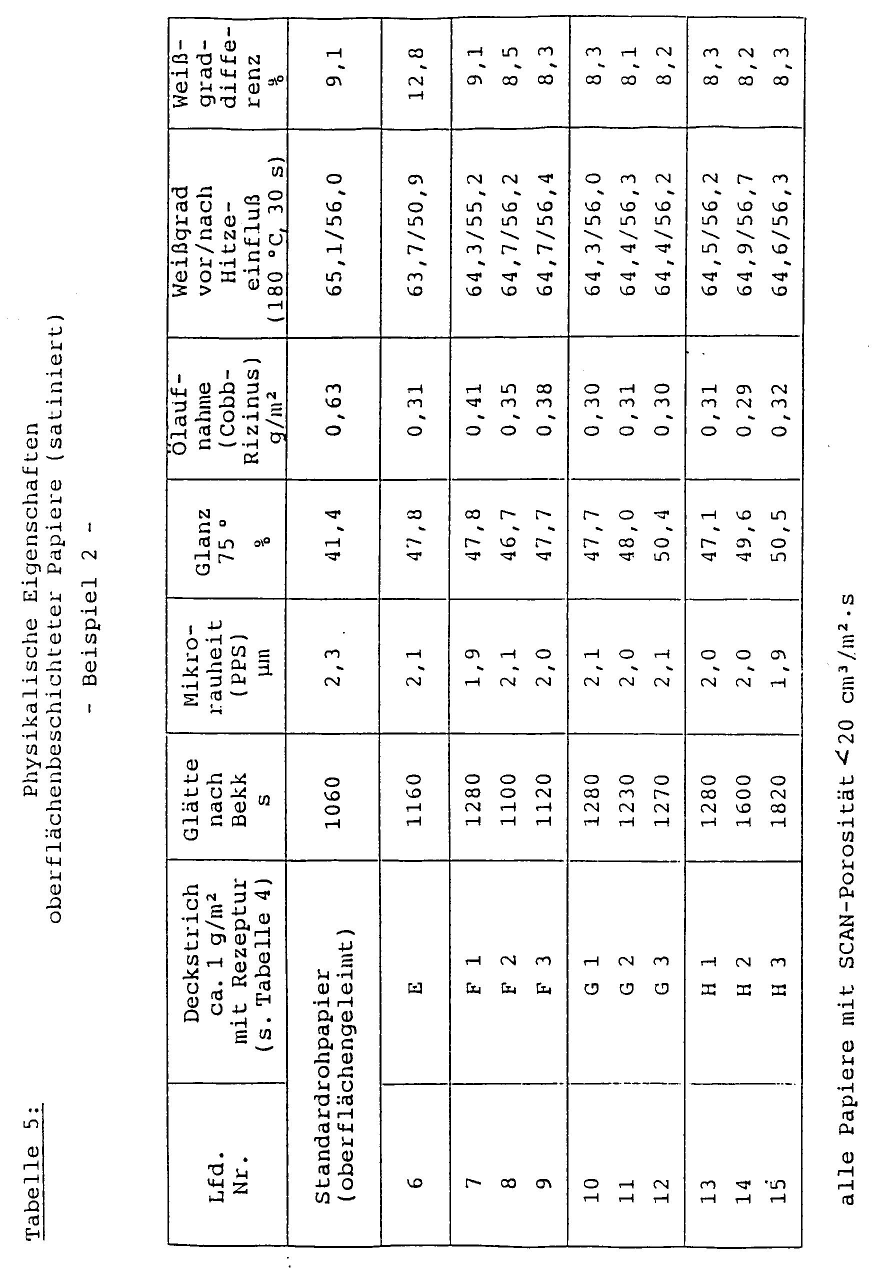

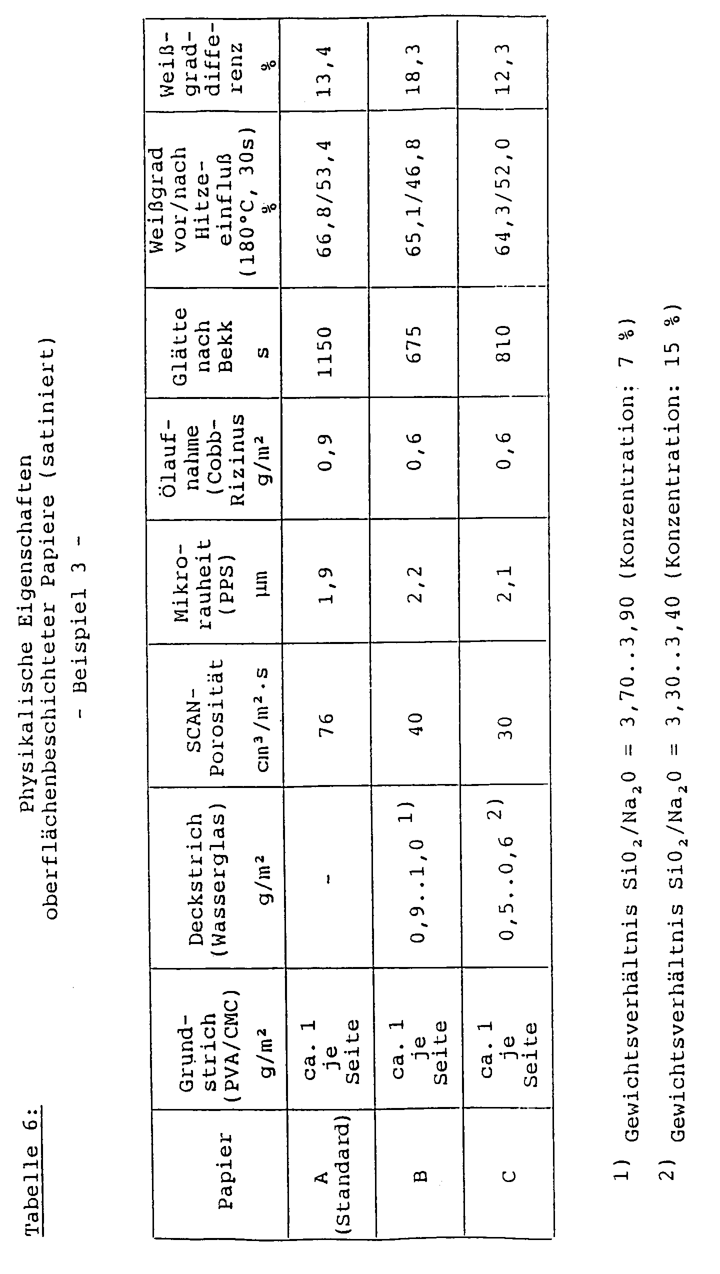

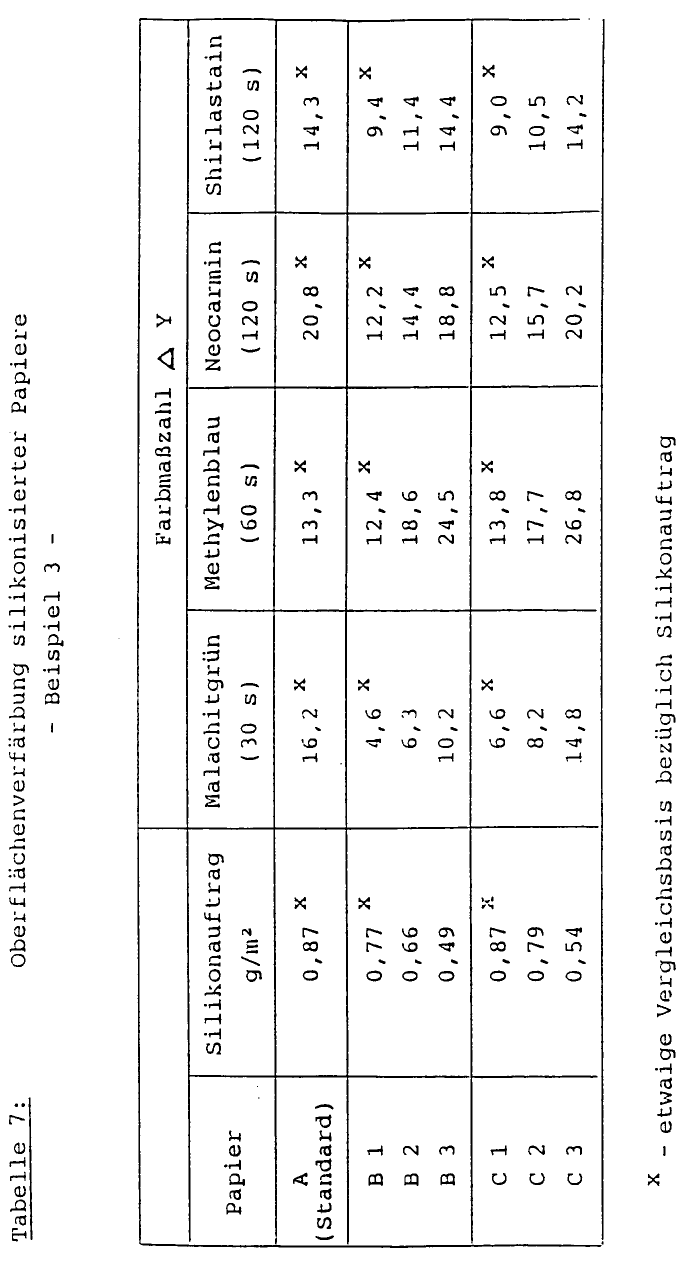

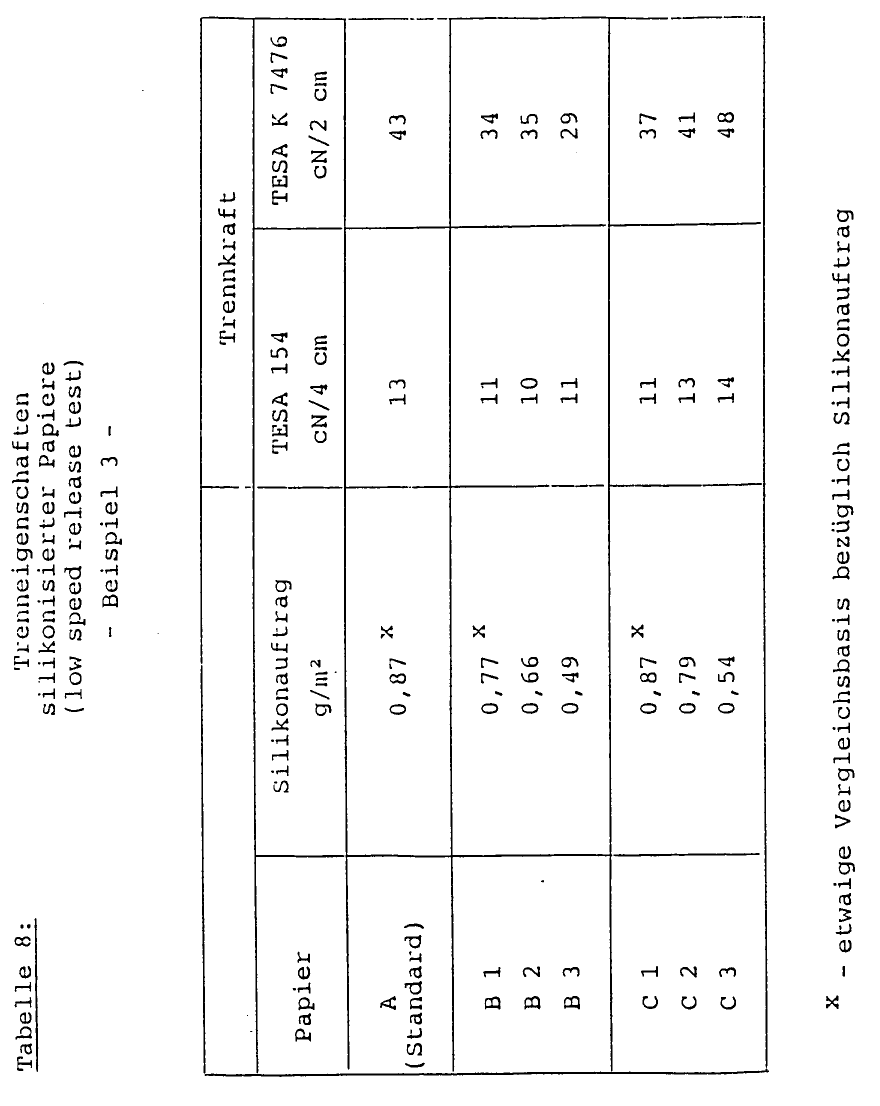

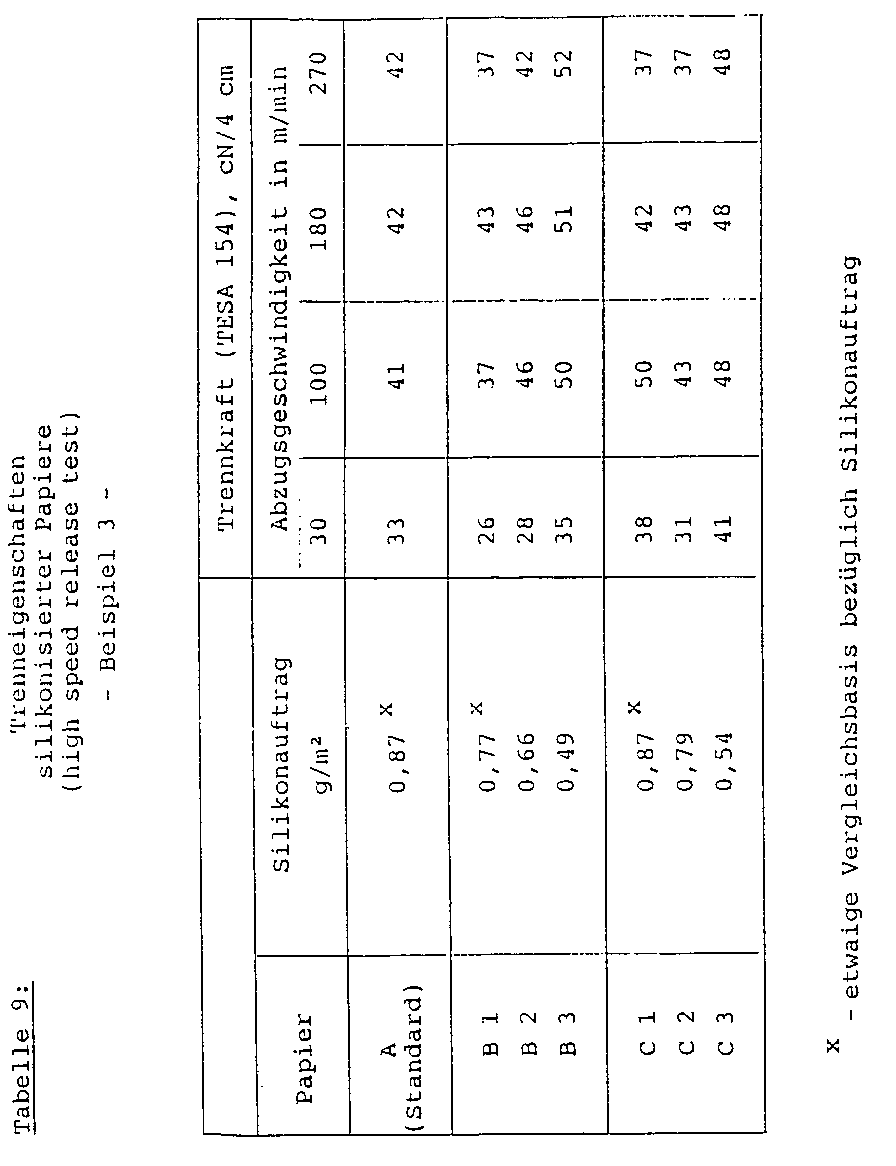

## Patentansprüche

1. Trennrohpapier für die Beschichtung mit einem dehäsiven Silikonauftrag, dadurch gekennzeichnet, daß auf dem Papier ein Wasserglasstrich ausgebildet ist.

2. Trennrohpapier nach Anspruch 1, dadurch gekennzeichnet, daß der Wasserglasstrich Filmbildner enthält.

3. Trennrohpapier nach Anspruch 2, dadurch gekennzeichnet, daß als Filmbildner wasserlösliche Filmbildner wie Polyvinylalkohole, Stärkederivate, Carboxymethylcellulosen, Alginate, als wäßrige Polymerdispersionen solche auf der Basis von Acrylsäure, Acrylsäureestern, Acrylnitril, Vinylacetat, Butadien und Styrol, als wäßrige Lösungen von Copolymeren solche auf der Basis von Maleinsäureanhydrid und Maleinsäure mit Styrol, Acrylsäure und Acrylsäureestern und/oder Plastifizierungsmittel mit stark hygroskopischen Eigenschaften wie Ethylenglykole und Glycerin eingesetzt werden.

4. Trennrohpapier nach Anspruch 2 oder 3, dadurch gekennzeichnet, daß Filmbildner in einer Menge von bis zu 30 % (fest gerechnet) im Wasserglasstrich enthalten sind.

5. Trennrohpapier nach einem der vorhergehenden Ansprüche, dadurch gekennzeichnet, daß der Wasserglasstrich in einer Masse von 0,5 bis 3 g/m² auf dem Papier ausgebildet ist.

6. Trennrohpapier nach einem der Ansprüche 1 bis 5, dadurch gekennzeichnet, daß der Wasserglasstrich auf einem oberflächengeleimten Papier ausgebildet ist.

7. Trennpapier mit einem dehäsiven Silikonauftrag, dadurch gekennzeichnet, daß der Silikonauftrag auf einem Trennrohpapier nach einem der Ansprüche 1 bis 6 ausgebildet ist.
